# FASCICULE DE BREVET EUROPEEN

(11) **EP 1 999 810 B1**
(45) Date de publication et mention de la délivrance du brevet: **07.10.2015**
(21) Numéro de dépôt: 07731131.4
(22) Date de dépôt: 13.03.2007
(51) Int. Cl.: H01M 4/36, H01M 4/58, H01M 4/62, H01M 4/02, H01M 4/587, H01M 10/052

(54) **COMPOSE A BASE DE DISPHOSPHATE DE TITANE ET DE CARBONE, PROCEDE DE PREPARATION ET UTILISATION COMME MATERIAU ACTIF D'UNE ELECTRODE POUR ACCUMULATEUR AU LITHIUM**
AUF TITAN-DIPHOSPHAT UND KOHLENSTOFF BASIERENDE VERBINDUNG, HERSTELLUNGSVERFAHREN UND VERWENDUNG ALS AKTIVES ELEKTRODENMATERIAL FÜR EINE LITHIUMSPEICHERBATTERIE
COMPOUND BASED ON TITANIUM DIPHOSPHATE AND CARBON, PREPARATION PROCESS AND USE AS AN ELECTRODE ACTIVE MATERIAL FOR A LITHIUM STORAGE BATTERY

(30) Priorité: 27.03.2006 FR 0602647
(43) Date de publication de la demande: 10.12.2008
(73) Titulaire: Commissariat à l'Énergie Atomique et aux Énergies Alternatives, 75015 Paris (FR)
(72) Inventeur: PATOUX, Sébastien, 38600 Fontaine (FR); BOURBON, Carole, F-38590 Saint-Michel-de-Saint Geoirs (FR)
(74) Mandataire: Hecké, Gérard
(86) Numéro de dépôt international: PCT/FR2007/000435
(87) Numéro de publication internationale: WO 2007/110495

(56) Documents cités:
- EP-A2- 1 049 182
- WO-A-02/099913
- WO-A2-2004/001881
- SHI ET AL: "Synthesis and characterization of mesoporous titanium pyrophosphate as lithium intercalation electrode materials" MICROPOROUS AND MESOPOROUS MATERIALS, ELSEVIER SCIENCE PUBLISHING, NEW YORK, US, vol. 88, no. 1-3, 21 janvier 2006 (2006-01-21), pages 232-237, XP005224885 ISSN: 1387-1811
- UEBOU Y ET AL: "Cathode properties of pyrophosphates for rechargeable lithium batteries" SOLID STATE IONICS, NORTH HOLLAND PUB. COMPANY. AMSTERDAM, NL, vol. 148, no. 3-4, 2 juin 2002 (2002-06-02), pages 323-328, XP004361827 ISSN: 0167-2738 cité dans la demande
- BARKER J ET AL: "A Carbothermal Reduction Method for the preparation of Electroactive Materials for Lithium Ion Applications" JOURNAL OF THE ELECTROCHEMICAL SOCIETY, ELECTROCHEMICAL SOCIETY. MANCHESTER, NEW HAMPSHIRE, US, vol. 150, no. 6, 2003, pages A684-A688, XP002332263 ISSN: 0013-4651
- BARKER,J. ET AL.L: "Lithium Iron (II) Phospho-olivines Prepared by a Novel Carbothermal Reduction Method" ELECTROCHEMICAL AND SOLID-STATE LETTERS, vol. 6, no. 3, 2003, pages A53-A55, XP002403722
- WURM C ET AL: "Lithium Insertion/Extraction into/from LiMX2O7 Compositions (M = Fe, V" CHEMISTRY OF MATERIALS, AMERICAN CHEMICAL SOCIETY, WASHINGTON, US, vol. 14, 2002, pages 2701-2710, XP002903583 ISSN: 0897-4756 cité dans la demande

## Description

### Domaine technique de l'invention

L'invention concerne un composé comprenant du disphosphate de titane et du carbone, un procédé de préparation et l'utilisation d'un tel composé.

### État de la technique

Les accumulateurs au lithium ont tendance à remplacer des accumulateurs nickel-cadmium (Ni-Cd) ou nickel-hydrure métallique (Ni-MH) comme source d'énergie autonome, en particulier dans les équipements portables. En effet, les performances et plus particulièrement la densité d'énergie massique des accumulateurs au lithium sont supérieures à celles des accumulateurs Ni-Cd et Ni-MH.

Les accumulateurs au lithium reposent sur le principe d'insertion et de désinsertion de cations Li⁺ dans au moins un matériau actif d'une électrode.

L'électrode négative des accumulateurs au lithium peut être génératrice d'ions Li⁺ ou bien elle peut comporter un matériau actif d'intercalation du lithium. Le choix du matériau formant l'électrode négative permet de classer les accumulateurs au lithium en deux grandes catégories d'accumulateurs au lithium : les systèmes Li-Ion, avec un électrolyte liquide ou solide (de type polymère), et les systèmes Li-Métal comprenant une électrode négative en lithium métallique et généralement un électrolyte polymère. Ainsi, le matériau actif de l'électrode négative peut être choisi parmi du lithium métallique, un alliage de lithium, un mélange nanométrique d'un alliage de lithium dans un oxyde de lithium, un nitrure de lithium et de métal de transition ou bien parmi un matériau d'intercalation ou d'insertion du lithium tel que du carbone sous forme graphite ou un matériau de structure spinelle de type Li₄Ti₅O₁₂.

L'électrode positive comporte quant à elle au moins un matériau capable d'insérer, de manière réversible, un certain nombre de cations Li⁺ dans sa structure, un tel matériau étant également appelé matériau d'intercalation du lithium.

Depuis l'émergence des accumulateurs au lithium, plusieurs générations de matériaux d'intercalation du lithium et notamment de matériaux actifs d'électrodes positives ont successivement fait leur apparition.

On connaît, en effet, les oxydes de lithium et de métal de transition tels que les oxydes de structure lamellaire comme LiCoO₂ et LiNiO₂ et tels que les oxydes de structure spinelle comme LiMn₂O₄. Les capacités massiques théoriques et pratiques de ces composés, pour une tension de fonctionnement par rapport au lithium métallique de l'ordre de 4 Volts, sont respectivement de 275 mAh/g et 140 mAh/g pour LiCoO₂ et LiNiO₂ et de 148 mAh/g et 120 mAh/g pour LiMn₂O₄.

Le concept d'insertion et de désinsertion du lithium dans les matériaux d'électrodes et depuis les matériaux d'électrodes a été étendu, il y a quelques années, aux structures tridimensionnelles construites à partir d'entités polyanioniques de type XOₙ^{m-}, avec X = P, S, Mo, W...

Ainsi, pour augmenter le potentiel d'insertion des matériaux actifs de l'électrode positive, il a été proposé de remplacer les oxydes de lithium et de métal de transition par des matériaux ayant une structure isotype de l'olivine, par exemple LiMPO₄ ou bien par des matériaux ayant une structure de type NASICON, par exemple LiₓM₂(PO₄)₃, M étant un métal (brevet américain US5910382). Ce type de matériaux présente, en effet, l'avantage d'être non seulement moins coûteux mais également plus stable à l'état chargé et en présence de l'électrolyte, que les oxydes de lithium et de métal de transition usuellement utilisés. De plus, les matériaux ayant une structure isotype de l'olivine ou de type NASICON sont non toxiques. Le phosphate de fer lithié LiFePO₄ est, par exemple, un composé de plus en plus utilisé pour former un composé actif d'électrode positive, notamment dans des domaines en développement tels que le domaine de l'automobile hybride. LiFePO₄ présente une capacité spécifique théorique de 170 mAh/g pour un potentiel de fonctionnement de 3,4 Volts par rapport au potentiel du couple Li/Li⁺.

Récemment, certaines études ont porté sur les capacités d'insertion et de désinsertion du lithium dans des composés à base de diphosphates. A titre d'exemple, dans l'article « Lithium Insertion/Extraction into/from LiMX2O7 compositions (M=Fe, V ; X = P, As) prepared via a solution method » (Chem. Mater. 2002, 14, 2701-2710), C. Wurm et al. ont évalué le potentiel en tant que matériaux actifs d'électrode dans des batteries rechargeables au lithium des composés LiFeP₂O₇, LiFeAs₂O₇ et LiVP₂O₇. Les composés sont préparés en mélangeant des précurseurs solubles dans de l'eau déminéralisée puis en réalisant une lente évaporation sous agitation continue jusqu'à ce que le mélange soit sec. Le mélange sec subit ensuite un traitement thermique à une température comprise entre 300°C et 800°C.

Des études portant sur l'utilisation du disphosphate de titane (TiP₂O₇) comme matériau actif d'électrode ont également été réalisées. Ainsi, S. Patoux et al., dans leur article « Lithium Insertion into Titanium Phosphates, Silicates and Sulfates ») Chem Mater. 2002, 14, 5057-5068) ont étudié l'utilisation de silicates, de sulfates et de phosphates comportant du titane dans un état d'oxydation +4, comme matériaux actifs d'électrode positive dans des accumulateurs au lithium. Ils ont trouvé que TiP₂O₇ pouvait être un matériau d'électrode positive intéressant pour des batteries au lithium de type Li-Métal, comprenant un électrolyte polymère et une électrode négative en lithium, avec une tension de fonctionnement de 2,5-2,6 Volts. En effet, les accumulateurs au lithium de type Li-Métal présentent l'avantage d'avoir une électrode négative en lithium métallique. Le matériau actif de l'électrode positive n'a donc pas besoin d'être initialement lithié. Dans ce cas, les ions Li⁺ sont initialement apportés par l'électrode négative et s'insèrent dans l'électrode positive au cours de la première décharge de l'accumulateur au lithium. Le processus électrochimique est parfaitement réversible dans les accumulateurs de type Li-Métal car les ions Li⁺ peuvent circuler de l'électrode négative vers l'électrode positive et vice-versa.

Dans l'article « Synthesis and characterization of mesoporous titanium pyrophosphate as lithium intercalation elecrtode materials » (Microporous and Mesoporous Materials 88 (2006) 232-237), Zhincong Shi et al. ont étudié la synthèse et la caractérisation de TiP₂O₇ mésoporeux, par un procédé sol-gel, puis par calcination.

Cependant, dans l'article « Cathode properties of pyrophosphates for rechargeable lithium batteries » (Solide State lonics 148 (2002) 323-328), Y. Uebou et al. montrent que, dans le diphosphate de titane (TiP₂O₇), seulement 0,6 Li par unité peut être inséré dans TiP₂O₇ à un potentiel de 2,6 V par rapport au potentiel du couple Li/Li⁺ (2,6 V vs Li/Li⁺). Le composé TiP₂O₇ a été synthétisé par réaction à l'état solide, à une température de l'ordre de 700°C, pendant une période de 12 à 24 heures et sous air. Un tel composé présente, donc, une faible conductivité électronique intrinsèque, ce qui limite la cinétique d'insertion et d'extraction du lithium au sein de la structure et l'utilisation de ces composés à des régimes de charge et de décharge relativement faibles.

De plus, les phosphates en général et plus particulièrement les diphosphates, présentent l'inconvénient d'être isolants d'un point de vue électronique.

Pour améliorer la conductivité électronique du matériau formant une électrode positive, il est connu de mélanger intimement le composé à base de phosphate avec du carbone. Ainsi, dans l'article « Lithium Insertion/Extraction into/from LiMX₂O₇ compositions (M=Fe, V ; X = P, As) prepared via a solution method » de C. Wurm et al., les composés LiFeP₂O₇, LiFeAs₂O₇ et LiVP₂O₇, une fois synthétisés, sont chacun broyés avec du carbone, de manière à améliorer l'activité électrochimique du composé actif d'une électrode positive. Le composé actif présente, cependant, l'inconvénient d'être sous une forme pulvérulente.

Un procédé similaire est également décrit dans le document WO-02/099913. pour une poudre de LiFePO₄ synthétisée à partir d'une solution aqueuse de Li⁺, Fe³⁺ et PO₄³⁻, par évaporation de l'eau contenue dans la solution, décomposition du mélange solide résultant et traitement thermique à une température inférieure à 800°C dans une atmosphère réductrice (réduction de Fe^{III} en Fe"). La poudre synthétisée peut ensuite être mélangée à de la poudre de carbone conducteur.

De même, dans l'article de S. Patoux et al. (« Lithium Insertion into Titanium Phosphates, Silicates and Sulfates » Chem Mater. 2002, 14, 5057-5068), une fois synthétisé, le composé TiP₂O₇ est broyé dans un broyeur à billes avec 16,67 % en masse de noir de carbone, avant d'être utilisé sous forme pulvérulente comme électrode positive. Une telle électrode positive présente l'inconvénient d'être sous forme pulvérulente. Or, un tel procédé de fabrication d'une électrode positive peut être utilisé en laboratoire, mais il n'est pas possible de fabriquer une telle électrode de manière industrielle. En effet, des électrodes positives sous forme de poudre sont peu pratiques à mettre en oeuvre dans des accumulateurs au lithium fabriqués en série et leur procédé de fabrication nécessite deux étapes successives, respectivement de synthèse et de broyage.

Pour d'autres matériaux actifs et notamment LiFePO₄, il a été proposé de revêtir la surface de certains matériaux par du carbone ou par un matériau carboné. Dans la demande de brevet WO-A-2004/001881, il est, ainsi, proposé de synthétiser des poudres, par exemple en LiFePO₄, recouvertes de carbone, en préparant une solution aqueuse contenant des sources de Lithium, de fer et de phosphates et des composés monomères comprenant du carbone, puis en réalisant une évaporation de l'eau et un traitement thermique en atmosphère réductrice. De même, la demande de brevet EP-A-1049182 propose aussi diverses méthodes pour revêtir par voie chimique des matériaux d'électrodes et notamment LiFePO₄, par un revêtement uniforme de matériau carboné conducteur. Par ailleurs, dans les articles « A carbothermal reduction method for the prepartion of electroactive materials for lithium Ion Applications » (Journal of the Electrochemical Society, 150(6) A684-A688 (2003)) et « Lithium Iron(II) Phospho-olivines prepared by a novel carbothermal réduction method » (Electrochemical and Solid State Letters, 6 (3) A53-A55 (2003)) J Barker et al. proposent une voie de synthèse par réduction carbothermique pour les composés LiFePO₄ ou LiFe_{0,9}Mg_{0,1}PO₄ et LiV₂O₅ ou Li₃V₂(PO₄)₃, selon laquelle du carbone est mélangé intimement à des composés précurseurs et le mélange est chauffé dans une atmosphère inerte, afin que le carbone réduise le métal de transition de l'un des composés précurseurs pour former le composé souhaité.

### Objet de l'invention

L'invention a pour but un composé présentant des propriétés adaptées à son utilisation comme matériau actif d'une électrode pour accumulateur au lithium.

Selon l'invention, ce but est atteint par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un diagramme de diffraction des rayons X (λ_{CuKα}) d'un composé particulier selon l'invention comportant TiP₂O₇ et 4,4% en masse de C.
Les figures 2 et 3 représentent deux clichés obtenus par microscopie électronique à balayage (MEB) d'un composé particulier selon l'invention, comportant TiP₂O₇ avec 4,4% en masse de C, respectivement à des agrandissements de 267x et de 10000x.
La figure 4 représente un cliché obtenu par microscopie électronique à balayage (MEB) de TiP₂O₇, à un agrandissement de 346x.
La figure 5 représente la structure cristalline de TiP₂O₇ dans le plan (a, b).
La figure 6 représente les courbes intentiostatiques, à 20°C, du premier cycle de charge/décharge, à un régime de C/10 de deux composés, respectivement en TiP₂O₇ (courbe A) et en TiP₂O₇ avec 7,7% en masse de C (courbe B).
La figure 7 représente une courbe de charge/décharge en mode galvanostatique intermittent (régime de C/20, 20°C) avec des périodes en circuit ouvert de deux heures, sur laquelle est reportée l'évolution du potentiel par rapport au couple Li⁺/Li en fonction de la proportion x de lithium insérée dans un composé selon l'invention comprenant TiP₂O₇ avec 6,6% en masse de C.
La figure 8 représente les premiers cycles de charge/décharge en mode intentiostatique, à 20°C et à 55°C, d'une électrode à base d'un composé comprenant TiP₂O₇ avec 6,6% en masse de C, tandis que la figure 9 représente l'évolution de la capacité spécifique d'une telle électrode en fonction du nombre de cycles.
La figure 10 représente l'évolution de la capacité de charge par rapport à la capacité de charge du premier cycle en fonction du nombre de cycles (régime de cyclage intentiostatique : C/10 et C/2, avec une température de cyclage de 20°C) pour un composé TiP₂O₇ avec 6,6% en masse de C.

### Description de modes particuliers de réalisation

Selon l'invention, un composé comprenant du disphosphate de titane TiP₂O₇ et du carbone présente des propriétés adaptées à son utilisation comme matériau actif d'une électrode pour accumulateur au lithium. Un tel composé est, plus particulièrement, un matériau composite dans lequel TiP₂O₇ et le carbone sont intimement liés, de sorte que le carbone recouvre au moins en partie la surface des particules de TiP₂O₇.

Ainsi, le composé est sous forme de particules non agglomérées de disphosphate de titane, dont la surface est au moins en partie recouverte de carbone. De plus, les particules du composé sont, de préférence, des particules aplanies ayant une longueur moyenne comprise entre 5 et 10 micromètres et une hauteur moyenne comprise entre 0,2 et 1 micromètre.

Le composé comporte, de préférence, entre 0,1% et 30% en masse de carbone et plus particulièrement entre 4% et 8% en masse de carbone et la surface spécifique du composé est, de préférence, supérieure ou égale à 6m²/g et, préférentiellement comprise entre 6m²/g et 14m²/g.

Un tel composé est, plus particulièrement, obtenu par un procédé de préparation comportant successivement :
- le mélange d'au moins un premier précurseur comportant l'élément titane avec un degré d'oxydation +4, un second précurseur à base de phosphore et un précurseur organique contenant l'élément carbone,
- et le traitement thermique du mélange obtenu, à une température comprise entre 500°C et 800°C, sous atmosphère inerte. Le traitement thermique provoque alors la synthèse du diphosphate de titane et la formation, sur au moins une partie de la surface des particules de diphosphate de titane, de carbone par décomposition du précurseur organique.

Le précurseur organique est un composé organique apte à se décomposer pour former au moins du carbone pendant l'étape de traitement thermique. Il est, de préférence, choisi parmi les carbohydrates tels que l'amidon, la cellulose et leurs dérivés, par exemple la carboxyméthylcellulose, l'hydroxypropylméthylcellulose, l'acétate de cellulose...

Le précurseur organique est mélangé avec des précurseurs du diphosphate de titane de manière à former in situ, c'est-à-dire au cours de la synthèse du diphosphate de titane, du carbone recouvrant au moins en partie les particules de diphosphate de titane synthétisées. La décomposition du précurseur organique correspond à une calcination en atmosphère inerte, permettant de former du carbone et de libérer divers gaz tels que CO, CO₂, des aldéhydes...

Le mélange des précurseurs du diphosphate de titane avec le précurseur organique peut être de tout type. Il peut, par exemple, être réalisé par mélange à sec, par exemple par mécanosynthèse ou par broyage au mortier. Il peut également être réalisé dans un solvant (par exemple de l'hexane, de l'heptane...). Le solvant est alors évaporé à température ambiante avant que le mélange ne subisse le traitement thermique.

Les précurseurs du diphosphate de titane sont formés par un premier précurseur comportant l'élément titane avec un degré d'oxydation +4 et par un second précurseur à base de phosphore. Leurs proportions sont, de préférence, stoechiométriques dans le mélange avec le précurseur organique. La proportion en précurseur organique dans le mélange est quant à elle variable. Le premier précurseur peut être choisi parmi l'oxyde de titane et le tétrachlorure de titane et le second précurseur peut être choisi parmi l'acide phosphorique H₃PO₄, l'hydrogénophosphate d'ammonium (NH₄)₂HPO₄ et le dihydrogénophosphate d'ammonium (NH₄)H₂PO₄.

L'étape de traitement thermique est réalisée sous atmosphère de gaz.inerte, tel que l'argon ou l'azote, à une température comprise entre 500°C et 800°C et, de préférence, entre 580°C et 680°C. Le choix de la température est, plus particulièrement déterminé par le précurseur organique utilisé et par le taux de carbone désiré dans le composé obtenu. Le traitement thermique doit être réalisé à une température inférieure ou égale à 800°C, de manière à éviter la réduction partielle ou totale des ions Ti⁴⁺ en ions Ti³⁺ ou la formation de phosphures de titane (TiPₓ). La durée de l'étape de traitement thermique est relativement courte. Elle est, de préférence, comprise entre 15 minutes et 45 minutes. A titre d'exemple, l'étape de traitement thermique est réalisée par une montée en température choisie entre 580°C et 800°C. Ainsi, il a été constaté que le composé TiP₂O₇/C est synthétisé à 600°C, après seulement une dizaine de minutes de traitement. Il a également été constaté que plus la température, choisie entre 580°C et 800°C, est élevée, plus le précurseur organique se décompose et plus le carbone est conducteur. En revanche, plus la température est élevée, plus la taille des grains du composé TiP₂O₇/C augmente. La détermination de la température du traitement thermique correspond donc à un compromis entre les propriétés de conduction du carbone et la taille des grains.

Plusieurs composés de type TiP₂O₇/C ont été réalisés, à titre d'exemples, par un procédé de préparation selon l'invention.

### Exemple 1 :

Un composé TiP₂O₇/C a été réalisé en mélangeant 10,805 grammes de TiO₂ de forme anatase avec 31,110 grammes de NH₄H₂PO₄ et 3 grammes de cellulose dans un broyeur de type Retsch pendant cinq heures. La vitesse de rotation du broyeur est de 500 tours par minute, avec un sens de rotation alterné. Le bol de broyage, en quartz et de 250 cm³ de contenance, est rempli sous air et il contient 13 billes de broyage en quartz de 20 mm de diamètre et de 10,8 grammes chacune. Le mélange est ensuite traité à 700°C, sous argon, pendant 30 minutes, dans un tube en quartz fermé.

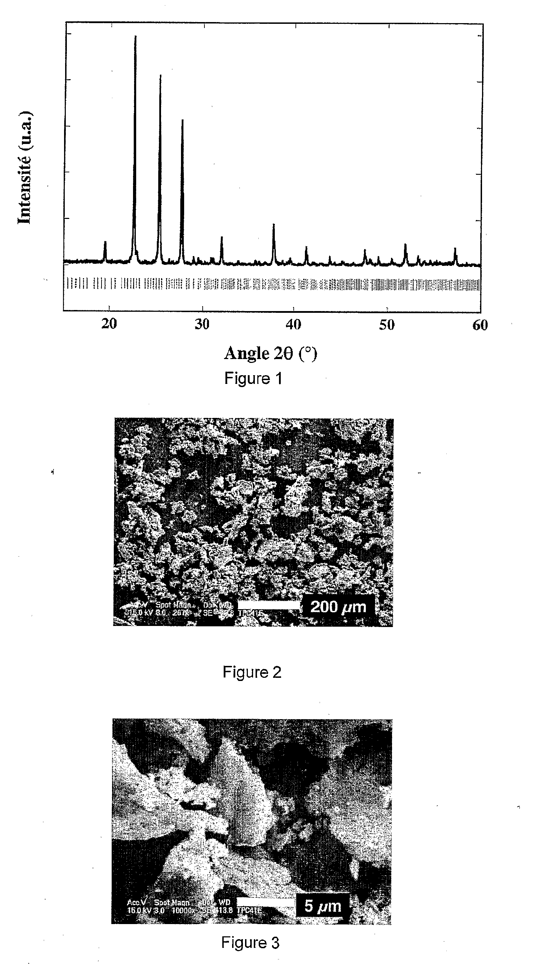

A la fin du traitement thermique, un composé TiP₂O₇/C comportant 4,4% en masse de carbone est obtenu. La figure 1 correspond au diagramme de diffraction des rayons X (λ_{CuKα}) du composé obtenu selon l'exemple 1, les pics verticaux correspondant aux positions de Bragg calculées pour le groupe d'espace Pa-3 et pour un paramètre de maille de 23,636 Angströms. La surface spécifique du composé obtenu selon l'exemple 1 est de 7,4 m²/g (±0,1 m²/g). On observe, par ailleurs, sur les figures 2 et 3, que les particules obtenues sont non agglomérées et aplanies, avec un diamètre d'environ 5µm et une hauteur d'environ 1 µm.

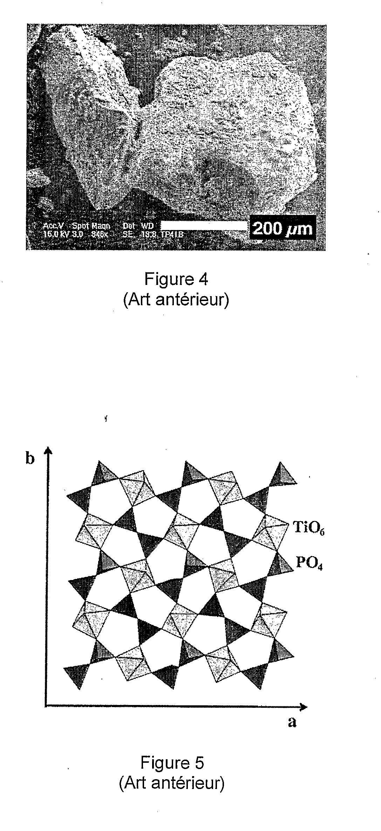

A titre de comparaison, un composé comportant uniquement TiP₂O₇ a été réalisé par réaction à l'état de solide, sous air, à une température de 1000°C, pendant 24 heures et à partir de TiO₂ et NH₄H₂PO₄. Le composé obtenu présente une surface spécifique de seulement 1,1 m²/g (±0,1 m²/g), ce qui est insuffisant pour obtenir des bonnes performances électrochimiques du fait de la mauvaise conductivité. Sur la figure 4, on observe également que les particules de TiP₂O₇ pur sont plus grosses et plus sphériques que celles obtenues par le procédé de préparation de l'exemple 1.

A titre d'information, la figure 5 représente la structure cristallographique de TiP₂O₇. Le diphosphate de titane TiP₂O₇ présente une structure cubique désordonnée résultant d'une sur-structure de type 3x3x3. Ainsi, la structure est composée de groupements diphosphate (P₂O₇)⁴⁻ formés de tétraèdres PO₄³⁻ et liés à des octaèdres TiO₆ selon un arrangement de type NaCl. La disposition des polyèdres est identique suivant les trois directions de l'espace et elle est présentée, sur la figure 5, dans le plan (a, b), a et b étant les paramètres de maille.

### Exemple 2 :

27,013 grammes de TiO₂ de forme anatase et 77,775 grammes de NH₄H₂PO₄ sont broyés manuellement au mortier avec 7,5 grammes de cellulose et 20 mL d'hexane. Après évaporation de l'hexane, à température ambiante sous une hotte, le mélange est ensuite traité à 600°C, sous argon, pendant 40 minutes, dans un tube en acier inoxydable fermé. Le composé obtenu est un composite TiP₂O₇/C, comportant 5,2% en masse de carbone.

### Exemple 3 :

10,805 grammes de TiO₂ de forme anatase et 31,110 grammes de NH₄H₂PO₄ sont mélangés avec 3,3 grammes d'hydroxypropylméthylcellulose dans un broyeur planétaire de type Fritsch pendant une heure. La vitesse de rotation du broyeur est de 200 tours par minute, avec un sens de rotation alterné. Le bol de broyage, en carbure de tungstène et de 250 cm³ de contenance, est rempli sous air et il contient 10 billes de broyage en carbure de tungstène de 20 mm de diamètre et de 62,4 grammes chacune. Le mélange est ensuite traité à 650°C, sous argon, pendant 15 minutes, dans un tube en quartz fermé. Un composé TiP₂O₇/C comportant 6,6% en masse de carbone a été obtenu.

### Exemple 4 :

Un composé TiP₂O₇/C a été réalisé en mélangeant 1,801 grammes de TiO₂ de forme anatase avec 5,185 grammes de NH₄H₂PO₄ et 0,5 grammes de cellulose dans un broyeur planétaire de type Retsch pendant 15 minutes. La vitesse de rotation du broyeur est de 100 tours par minutes, avec un sens de rotation alterné. Le bol de broyage, en quartz et de 50 cm³ de contenance, est rempli sous air et il contient 15 billes de broyage en quartz de 10 mm de diamètre et de 1,4 grammes chacune. Le mélange est ensuite traité à 700°C, sous argon, pendant 20 minutes dans un tube en quartz fermé. Un composé TiP₂O₇/C comportant 4,6% en masse de carbone a été obtenu.

On constate donc que le fait de mélanger un composé organique comprenant du carbone avec un précurseur comprenant l'élément titane dans un degré d'oxydation +4, et le fait de réaliser le traitement thermique à une température comprise entre 500°C et 800°C permet, de manière inattendue et rapide, de synthétiser TiP₂O₇. Cela permet donc de conserver l'élément titane dans un état d'oxydation +4, ce qui est particulièrement surprenant dans la mesure où le carbone est connu pour agir comme un réducteur de l'élément de transition présent dans l'un des précurseurs. C'est notamment le cas avec LiFePO₄. Ainsi, l'article de J. Barker et al. (« Lithium Iron(II) Phospho-olivines Prepared by a Novel Carbothermal Reduction Method », Electrochemical and Solid-State Letters, 6 (3), A53-A55 (2003)) décrit la préparation de LiFePO₄ et de LiFe_{0,9}Mg_{0,1}PO₄ par un procédé de réduction carbothermique (procédé CTR ou « Carbothermal Reduction Method »). Pour LiFePO₄, le procédé consiste à mélanger un précurseur comportant l'élément fer sous l'état d'oxydation +3 (Fe(III) ou Fe³⁺), par exemple Fe₂O₃, avec un précurseur comportant l'élément lithium et l'entité PO₄³⁻, par exemple LiH₂PO₄, et avec du carbone. L'ensemble est, ensuite, soumis à un traitement thermique réalisé à une température de 750°C pendant 8 heures. Ce procédé permet de synthétiser LiFePO₄, en réduisant l'élément Fe(III) en Fe(II) et en oxydant le carbone en monoxyde de carbone (CO).

Par ailleurs, le procédé de préparation selon l'invention présente l'avantage de réaliser le traitement thermique à une température relativement modérée et, de préférence pendant un temps relativement court. Ceci évite la formation de phosphures, comme cela est discuté dans la demande de brevet WO-A-2004/001881 où un composite LiFePO₄/C est synthétisé à partir d'un précurseur organique comprenant du carbone.

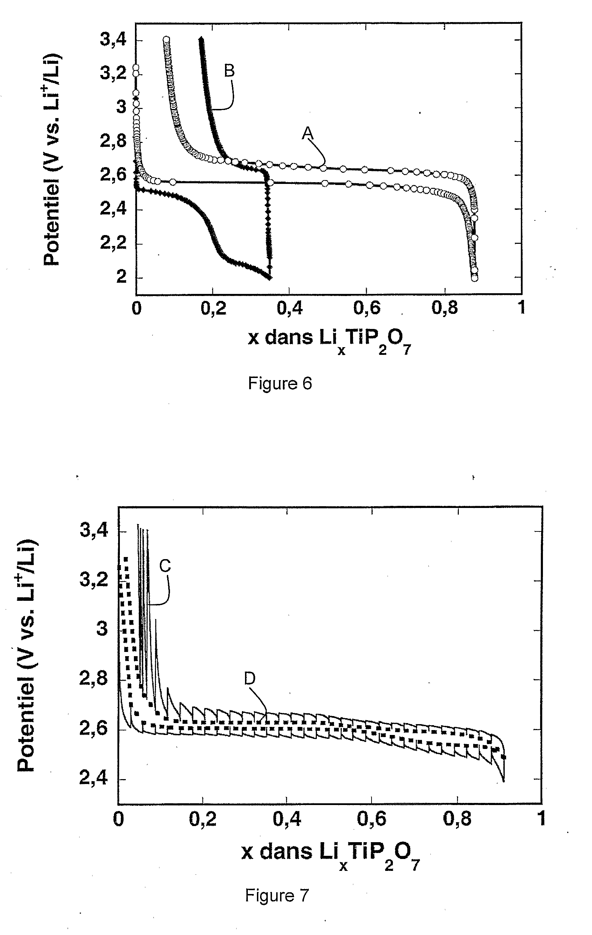

De plus, le procédé de préparation selon l'invention, et notamment le fait de réaliser la synthèse du diphosphate de titane à une température modérée et pendant un temps relativement court, permettent de réduire la croissance cristalline des particules de TiP₂O₇. En effet, les particules de TiP₂O₇ synthétisées par le procédé de préparation selon l'invention sont peu ou pas agglomérées, elles sont exemptes d'impuretés et surtout elles sont de petite taille. Ceci conduit à une amélioration de la conductivité ionique en comparaison au TiP₂O₇ pur réalisé selon l'art antérieur, puisque la diffusion des ions Li⁺ au coeur des grains TiP₂O₇ est améliorée par des chemins de diffusion raccourcis. Sur la figure 6, la courbe A correspond à la courbe de charge/décharge du composé TiP₂O₇/C obtenu selon l'exemple 2 tandis que la courbe B correspond à la courbe de charge/décharge d'un composé TiP₂O₇ obtenu selon l'art antérieur et tel que représenté sur la figure 4. Les deux composés ont été testés dans des conditions identiques, dans un accumulateur au lithium de type « pile bouton ». On constate que les performances du composé TiP₂O₇/C sont nettement supérieures à celles du composé pur de TiP₂O₇. La quantité de lithium échangée dans le composé TiP₂O₇/C est, en effet, deux fois supérieure à celle échangée dans le composé pur de TiP₂O₇ et la polarisation est nettement plus faible dans le composé TiP₂O₇/C que dans celle du composé pur TiP₂O_{7.}

De plus, le carbone étant conducteur électronique, sa présence à la surface des particules de TiP₂O₇ dans le composé selon l'invention permet d'améliorer la conductivité électronique de TiP₂O₇.

Le composé TiP₂O₇/C est également un matériau capable d'insérer et de désinsérer, dans sa structure, les ions Li⁺. Ainsi, lors du fonctionnement d'un accumulateur au lithium, la réaction réversible d'insertion et de désinsertion du lithium dans le composé TiP₂O₇/C est schématiquement la suivante :

Ti^{IV}P₂O₇/C + Li⁺ + e⁻ ⇔ LiTi^{III}P₂O₇/C

La figure 7 illustre la variation du potentiel du couple (Ti^{IV}P₂O₇/C)/(LiTi^{III}P₂O₇/C) par rapport au couple Li⁺/Li en fonction de la proportion x de lithium insérée dans le composé TiP₂O₇/C obtenu selon l'exemple 3, pendant des opérations de charge/décharge en mode galvanostatique intermittent, avec un régime C/20 et à 20°C et avec des périodes de circuit ouvert de deux heures. La courbe C en trait continu représente la courbe de charge/décharge du composé obtenu en mode galvanostatique intermittent tandis que la courbe D en pointillés représente la courbe à l'équilibre et permet de suivre le potentiel en circuit ouvert. On constate, ainsi, que la réaction d'insertion (/désinsertion) du lithium dans (/depuis) le composé TiP₂O₇/C s'effectue à 2,62-2,55 V par rapport au couple Li⁺/Li. On constate ainsi que la polarisation correspondant à la résistance interne de ce système est relativement faible.

Ainsi, le composé TiP₂O₇/C selon l'invention présente des propriétés particulièrement adaptées pour son utilisation comme matériau actif d'une électrode pour accumulateur au lithium.

En effet, pour les accumulateurs au lithium de type Li-Métal, il est souhaitable que le matériau d'insertion/désinsertion du lithium ait un potentiel le plus élevé possible par rapport au couple Li⁺/Li, de manière à obtenir un matériau pouvant insérer de façon réversible le lithium sur un nombre de cycles élevé. Cependant, ledit potentiel ne doit pas être trop élevé non plus, car on utilise généralement, dans ce type d'accumulateur, des polymères qui sont instables au-delà de 3,5V par rapport au potentiel du couple Li⁺/Li (polymères à base de polyoxyde d'éthylène par exemple). Un bon compromis est, alors, un matériau possédant un potentiel moyen de l'ordre de 2,5V par rapport au potentiel du couple Li⁺/Li. Les oxydes de vanadium remplissent, par exemple, ces exigences, mais le vanadium est un élément toxique. Ainsi, le composé TiP₂O₇/C, compte tenu de son potentiel d'insertion/désinsertion du lithium, est un matériau capable de remplacer les oxydes de vanadium. Il présente également l'avantage d'être non toxique, stable en cyclage et d'être peu coûteux.

Dans les accumulateurs au lithium de type Li/Ion, le matériau actif de l'électrode négative doit, en principe, présenter un potentiel d'insertion des ions lithium pas trop élevé par rapport au couple Li⁺/Li. En effet, le potentiel délivré par l'accumulateur correspond, dans ce cas, à la différence de potentiel entre les matériaux actifs respectifs des électrodes positive et négative. Si le matériau actif de l'électrode positive a, par exemple, un matériau ayant un potentiel à 5V vs Li⁺/Li, il est préférable que le matériau actif de l'électrode négative possède un potentiel inférieur à 3 V vs Li⁺/Li, ce qui est le cas du composé TiP₂O₇/C.

Il est également possible, grâce à ce composé, d'augmenter la température d'utilisation des accumulateurs au lithium employant un tel composé, ce qui le rend particulièrement adapté aux accumulateurs au lithium de type Li/Métal et comportant un électrolyte polymère. La température de fonctionnement d'un tel accumulateur est, en effet, d'au moins 60°C.

De plus, le composé pulvérulent obtenu présente également l'avantage de pouvoir être mis sous la forme d'un film formant l'électrode. Le film peut être constitué d'un support métallique formant un collecteur de courant et enduit par au moins TiP₂O₇/C. Plus particulièrement, le composé pulvérulent TiP₂O₇/C peut être mélangé à un additif conducteur électronique tel que du noir de carbone et/ou à un liant organique tel que le polyéther, le polyester, un polymère à base de méthacrylate de méthyle, l'acrylonitrile, le hexafluorure de vinylidène... de manière à former un film composite qui peut ensuite être déposé sur le support métallique, par exemple en aluminium.

Plusieurs accumulateurs au lithium ont été réalisés, à titre d'exemple, en utilisant comme matériau actif d'une électrode, le composé TiP₂O₇/C selon l'invention.

### Exemple A :

Un accumulateur au lithium de type Li/Métal et de forme « pile bouton » a été réalisé avec :
- une électrode négative en lithium, de 16 mm de diamètre et de 130 µm d'épaisseur, ladite électrode étant déposée sur un disque en nickel servant de collecteur de courant,
- une électrode positive constituée d'un disque de 14 mm de diamètre, ladite électrode étant déposée sur un collecteur de courant en aluminium, de 20µm d'épaisseur. Le disque est prélevé dans un film composite de 25 µm d'épaisseur comprenant 80% en masse du composé TiP₂O₇/C tel que préparé selon l'exemple 1, 10% en masse de noir de carbone et 10% en masse d'hexafluorure de polyvinylidène.
- un séparateur imbibé d'un électrolyte liquide à base du sel LiPF₆ (1mol/L) en solution dans un mélange de carbonate d'éthylène et de carbonate de diméthyle.

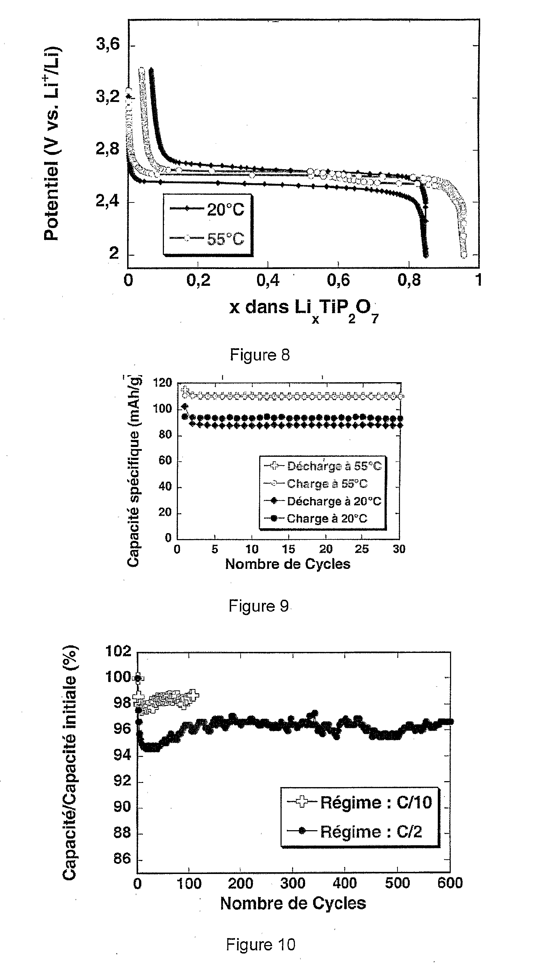

Un tel accumulateur au lithium a été testé en mode intensiostatique à 20°C et à 55°C, sous un régime C/10 (figures 8 et 9). Bien que les performances électrochimiques à 20°C soient satisfaisantes, l'élévation de la température à 55°C permet d'obtenir des performances plus améliorées encore. La polarisation est extrêmement faible et la tenue en cyclage de la capacité n'est pas altérée par l'élévation de température. A 20°C et à 55°C, la capacité est stable en cyclage et le rendement faradique est excellent. Sous un régime de C/10, l'accumulateur au lithium délivre une capacité de 110 mAh/g parfaitement stable en cyclage prolongé.

### Exemple B :

Un accumulateur au lithium de type Li/Métal et de forme « pile bouton » a été réalisé avec la même électrode négative et le même séparateur imbibé que ceux réalisés dans l'exemple A ci-dessus.

L'électrode positive est constituée d'un disque de 14 mm de diamètre et elle est déposée sur un collecteur de courant en aluminium, de 20µm d'épaisseur. Le disque est prélevé dans un film composite de 50 µm d'épaisseur comprenant 80% en masse du composé TiP₂O₇/C tel que préparé selon l'exemple 3, 10% en masse de noir de carbone et 10% en masse d'hexafluorure de polyvinylidène.

Comme représenté sur la figure 10, à 20°C, sous un régime de C/2, l'accumulateur au lithium ainsi réalisé délivre une capacité relativement stable sur plus de 600 cycles. Il apparaît qu'en cyclage intensiostatique, la capacité chute légèrement au cours des premiers cycles puis se stabilise parfaitement. Plus de 600 cycles sont, par exemple, obtenus sous un régime C/2, avec une perte de capacité inférieure à 4%. Ainsi, le composé TiP₂O₇/C est stable en cyclage prolongé et la réactivité par rapport à l'électrolyte, notamment par rapport au potentiel de cyclage, est quasi inexistante, ce qui implique qu'il n'y a pas de dégradation de l'électrolyte ou dudit composé.

### Exemple C :

Un accumulateur au lithium de type Li/Ion a été réalisé à partir d'une électrode négative comprenant le composé TiP₂O₇/C selon l'exemple 2, d'une électrode positive comprenant le composé LiNi_{0,5}Mn_{1,5}O₄ et un séparateur tel que celui commercialisé sous le nom Celgard 2400 et imbibé d'un électrolyte liquide à base du sel LiPF₆ (1mol/L) en solution dans un mélange de carbonate de propylène, de carbonate de diméthyle et de carbonate d'éthylène. Chacune des électrodes est constituée d'un mélange formé par 80% en masse de matériau actif (TiP₂O₇/C pour l'électrode négative et LiNi_{0,5}Mn_{1,5}O₄ pour l'électrode positive), 5% en masse de noir de carbone, 5% en masse de fibres de carbone et 10% en masse d'hexafluorure de polyvinylidène. Un tel mélange est déposé sur un collecteur de courant en aluminium.

A 25°C, l'accumulateur ainsi réalisé permet l'échange de près d'une mole d'ions Li⁺ par mole de TiP₂O₇, dans le domaine de potentiel 0,9-2,4 Volts par rapport au système TiP₂O_{7/} LiTiP₂O₇. Le potentiel moyen d'un tel accumulateur est d'environ 2,05-2,10 Volts.

L'électrolyte liquide utilisé dans les exemples A à C peut être remplacé par tout type d'électrolyte connu. Il peut, par exemple, être constitué d'un sel comportant au moins l'ion Li⁺. Le sel peut, par exemple, être choisi parmi LiClO₄, LiAsF₆, LiPF₆, LiBF₄, LiR_{F}SO₃, LiCH₃SO₃, LiN(R_{F}SO₂)₂, LiC(R_{F}SO₂)₂, LiTFSI, LiBOB, LiBETI. R_{F} est choisi parmi un atome de fluor et un groupement perfluoroalkyle comportant entre 1 et 8 atomes de carbone. LiTFSI est l'acronyme de lithium trifluorométhanesulphonylimide, LiBOB est l'acronyme de lithium bis(oxalato)borate et LiBETI est celui de lithium bis(perfluoroéthylsulfonyl)imide. Dans le cas d'un accumulateur de type Li/Ion, le sel est, de préférence, dissous dans un solvant polaire aprotique, tel que le carbonate de diéthylène, le carbonate de propylène, le carbonate de diméthyle, le carbonate de diéthyle, le carbonate d'éthylméthyle...et il peut être supporté par un élément séparateur disposé entre les deux électrodes de l'accumulateur. Dans le cas d'un accumulateur de type Li/Métal, le sel n'est pas dissous dans un solvant organique mais dans un polymère solide conducteur des ions Li⁺, tel que le polyoxyde d'éthylène (POE), le polyacrylonitrile (PAN), le polyméthacrylate de méthyle (PMMA), le polyfluorure de vinylidène (PVdF) ou un de leurs dérivés.

## Revendications

1. Composé comprenant du disphosphate de titane et du carbone **caractérisé en ce que** le composé est sous forme de particules non agglomérées de disphosphate de titane, dont la surface est au moins en partie recouverte de carbone.

2. Composé selon la revendication 1, **caractérisé en ce que** la surface spécifique du composé est supérieure ou égale à 6m²/g.

3. Composé selon la revendication 2, **caractérisé en ce que** la surface spécifique du composé est comprise entre 6m²/g et 14m²/g.

4. Composé selon l'une quelconque des revendications 1 à 3, **caractérisé en ce que** les particules sont des particules aplanies ayant une longueur moyenne comprise entre 5 et 10 micromètres et une hauteur moyenne comprise entre 0,2 et 1 micromètre.

5. Composé selon l'une quelconque des revendications 1 à 4, **caractérisé en ce qu'**il comporte entre 0,1% et 30% en masse de carbone.

6. Composé selon la revendication 5, **caractérisé en ce qu'**il comporte entre 4% et 8% en masse de carbone.

7. Procédé de préparation d'un composé selon l'une quelconque des revendications 1 à 6, **caractérisé en ce qu'**il comporte successivement :
- le mélange d'au moins un premier précurseur comportant l'élément titane avec un degré d'oxydation +4, un second précurseur à base de phosphore et un précurseur organique contenant l'élément carbone,
- et le traitement thermique du mélange obtenu, à une température comprise entre 500°C et 800°C, sous atmosphère inerte, ledit traitement thermique provoquant la décomposition du précurseur organique et la formation dudit composé.

8. Procédé selon la revendication 7, **caractérisé en ce que** le précurseur organique est choisi parmi les carbohydrates.

9. Procédé selon la revendication 8, **caractérisé en ce que** le précurseur organique est choisi parmi l'amidon, la cellulose et leurs dérivés.

10. Procédé selon l'une quelconque des revendications 7 à 9, **caractérisé en ce que** le premier précurseur est choisi parmi l'oxyde de titane et le tétrachlorure de titane.

11. Procédé selon l'une quelconque des revendications 7 à 10, **caractérisé en ce que** le second précurseur est choisi parmi l'acide phosphorique, l'hydrogénophosphate d'ammonium et le dihydrogénophosphate d'ammonium.

12. Procédé selon l'une quelconque des revendications 7 à 11, **caractérisé en ce que** les premier et second précurseurs sont en proportions stoechiométriques dans le mélange avec le précurseur organique.

13. Procédé selon l'une quelconque des revendications 7 à 12, **caractérisé en ce que** le mélange est réalisé à sec.

14. Procédé selon l'une quelconque des revendications 7 à 12, **caractérisé en ce que** le mélange est réalisé dans un solvant, ledit solvant étant évaporé à température ambiante avant la réalisation du traitement thermique.

15. Procédé selon l'une quelconque des revendications 7 à 14, **caractérisé en ce que** le traitement thermique est réalisé pendant une durée comprise entre quinze minutes et quarante-cinq minutes.

16. Procédé selon l'une quelconque des revendications 7 à 15, **caractérisé en ce que** la température du traitement thermique est comprise entre 580°C et 680°C.

17. Utilisation d'un composé selon l'une quelconque des revendications 1 à 6 comme matériau actif d'une électrode pour accumulateur au lithium.

## Patentansprüche

1. Verbindung, welche Titan-Diphosphat und Kohlenstoff enthält,
**dadurch gekennzeichnet,**
**dass** die Verbindung in Form von nicht zusammengeballten Partikeln von Titan-Diphosphat besteht, deren Oberfläche zumindest teilweise mit Kohlenstoff beschichtet ist.

2. Verbindung nach Anspruch 1,
**dadurch gekennzeichnet,**
**dass** die spezifische Oberfläche der Verbindung größer als oder gleich 6 m²/g ist.

3. Verbindung nach Anspruch 2,
**dadurch gekennzeichnet,**
**dass** die spezifische Oberfläche der Verbindung zwischen 6 m²/g und 14 m²/g beträgt.

4. Verbindung nach einem der Ansprüche 1 bis 3,
**dadurch gekennzeichnet,**
**dass** die Partikel abgeflachte Partikel sind, die eine durchschnittliche Länge von 5 bis 10 Mikrometern und eine durchschnittliche Höhe von 0,2 bis 1 Mikrometer aufweisen.

5. Verbindung nach einem der Ansprüche 1 bis 4,
**dadurch gekennzeichnet,**
**dass** sie 0,1% bis 30% Masseanteile Kohlenstoff enthält.

6. Verbindung nach Anspruch 5,
**dadurch gekennzeichnet,**
**dass** sie 4% bis 8% Masseanteile Kohlenstoff enthält.

7. Verfahren zur Herstellung einer Verbindung nach einem der Ansprüche 1 bis 6,
**dadurch gekennzeichnet,**
**dass** es folgende Schritte enthält:
- die Vermischung von mindestens einem ersten Zwischenstoff, der das Element Titan mit einem Oxidationsgrad von +4 enthält, einem zweiten Zwischenstoff auf Phosphor-Basis und einem organischen Zwischenstoff, der das Element Kohlenstoff enthält, und
- die Wärmebehandlung der erhaltenen Mischung bei einer Temperatur von 500°C bis 800°C in einer Schutzgasatmosphäre, wobei diese Behandlung die Auflösung des organischen Zwischenstoffs und die Bildung der genannten Verbindung bewirkt.

8. Verfahren nach Anspruch 7,
**dadurch gekennzeichnet,**
**dass** der organische Zwischenstoff unter den Carbohydraten gewählt wird.

9. Verfahren nach Anspruch 8,
**dadurch gekennzeichnet,**
**dass** der organische Zwischenstoff unter Stärke, Zellulose und deren Derivaten gewählt wird.

10. Verfahren nach einem der Ansprüche 7 bis 9,
**dadurch gekennzeichnet,**
**dass** der erste Zwischenstoff unter Titanoxid und Titan-Tetrachlorid gewählt wird.

11. Verfahren nach einem der Ansprüche 7 bis 10,
**dadurch gekennzeichnet,**
**dass** der zweite Zwischenstoff unter Phosphorsäure, Ammonium-Hydrogenphosphat und Ammonium-Dihydrogenphosphat gewählt wird.

12. Verfahren nach einem der Ansprüche 7 bis 11,
**dadurch gekennzeichnet,**
**dass** sich der erste und zweite Zwischenstoff in stöchiometrischen Proportionen in der Mischung mit dem organischen Zwischenstoff befinden.

13. Verfahren nach einem der Ansprüche 7 bis 12,
**dadurch gekennzeichnet,**
**dass** die Mischung trocken hergestellt wird.

14. Verfahren nach einem der Ansprüche 7 bis 12,
**dadurch gekennzeichnet,**
**dass** die Mischung in einem Lösungsmittel hergestellt wird, wobei dieses Lösungsmittel vor der Durchführung der Wärmebehandlung bei Umgebungstemperatur verdampft wird.

15. Verfahren nach einem der Ansprüche 7 bis 14,
**dadurch gekennzeichnet,**
**dass** die Wärmebehandlung während einer Zeitdauer von fünfzehn Minuten bis fünfundvierzig Minuten durchgeführt wird.

16. Verfahren nach einem der Ansprüche 7 bis 15,
**dadurch gekennzeichnet,**
**dass** die Temperatur der Wärmebehandlung zwischen 580°C und 680°C beträgt.

17. Verwendung einer Verbindung nach einem der Ansprüche 1 bis 6 als aktives Material einer Elektrode für Lithiumbatterien.

## Claims

1. A compound containing titanium diphosphate and carbon **characterized in that** the compound is in the form of non-agglomerated particles of titanium diphosphate the surface of which is at least partly covered with carbon.

2. The compound according to claim 1, **characterized in that** the specific surface of the compound is greater than or equal to 6m²/g.

3. The compound according to claim 2, **characterized in that** the specific surface of the compound is comprised between 6 m²/g and 14 m²/g.

4. The compound according to any one of claims 1 to 3, **characterized in that** the particles are flattened particles having a mean length comprised between 5 and 10 micrometers and a mean height comprised between 0.2 and 1 micrometer.

5. The compound according to any one of claims 1 to 4, **characterized in that** it comprises between 0.1% and 30% by weight of carbon.

6. The compound according to claim 5, **characterized in that** it comprises between 4% and 8% by weight of carbon.

7. A preparation method of a compound according to any one of claims 1 to 6, **characterized in that** it successively comprises:
- forming a mixture of at least a first precursor containing the titanium element with a +4 oxidation state, a second precursor containing phosphorus and an organic precursor containing the carbon element,
- and heat treatment of the obtained mixture at a temperature comprised between 500°C and 800°C, in an inert atmosphere, said heat treatment causing decomposition of the organic precursor and formation of said compound.

8. The method according to claim 7, **characterized in that** the organic precursor is chosen from carbohydrates.

9. The method according to claim 8, **characterized in that** the organic precursor is chosen from starch, cellulose and their derivatives.

10. The method according to any one of claims 7 to 9, **characterized in that** the first precursor is chosen from titanium oxide and titanium tetrachloride.

11. The method according to any one of claims 7 to 10, **characterized in that** the second precursor is chosen from phosphoric acid, ammonium hydrogenophosphate and ammonium dihydrogenophosphate.

12. The method according to any one of claims 7 to 11, **characterized in that** the first and second precursors are in stoichiometric proportions in the mixture with the organic precursor.

13. The method according to any one of claims 7 to 12, **characterized in that** the mixture is made dry.

14. The method according to any one of claims 7 to 12, **characterized in that** the mixture is made in a solvent, said solvent being evaporated at ambient temperature before the heat treatment is performed.

15. The method according to any one of claims 7 to 14, **characterized in that** the heat treatment is performed for a time comprised between fifteen minutes and forty-five minutes.

16. The method according to any one of claims 7 to 15, **characterized in that** the temperature of the heat treatment is comprised between 580°C and 680°C.

17. Use of a compound according to the any one of claims 1 to 6 as active material of an electrode for a lithium storage battery.
